Europäisches Patentamt

European Patent Office

Office européen des brevets

(11) Veröffentlichungsnummer: **0 320 676**
**A2**

## (12) EUROPÄISCHE PATENTANMELDUNG

(21) Anmeldenummer: 88119614.1

(22) Anmeldetag: 24.11.88

(51) Int. Cl.⁴: **B32B 5/18** , **B32B 27/08** , **C09J 7/02**

(30) Priorität: 05.12.87 DE 3741251

(43) Veröffentlichungstag der Anmeldung:
21.06.89 Patentblatt 89/25

(84) Benannte Vertragsstaaten:
**AT BE CH DE ES FR GB GR IT LI LU NL SE**

(71) Anmelder: **LOHMANN GmbH & CO KG**
**Irlicher Strasse 55**
**D-5450 Neuwied 12(DE)**

(72) Erfinder: **Milker, Roland, Dr.**
**Finkenweg 14**
**D-5457 Oberhonnefeld(DE)**

(74) Vertreter: **Neidl-Stippler, Cornelia, Dr.**
**Rauchstrasse 2**
**D-8000 München 80(DE)**

(54) Polymerbeschichteter Schaumstoff sowie Verfahren zu seiner Herstellung.

(57) Die Erfindung betrifft polymerfolienbeschichteten Schaumstoff, bei dem die Folienbeschichtung (14) durch Auftragen des Folienmaterials aus der Schmelze auf die Schaumstoffschicht (12) aufgebracht ist. Diese Schaumstoffe lassen sich bevorzugt zur Herstellung von verhauteten Dämpfungs-und Isolationsschäumen oder Akustikschäumen oder als Montageklebebänder einsetzen.

FIG. 1

EP 0 320 676 A2

## Polymerbeschichteter Schaumstoff sowie Verfahren zu seiner Herstellung

Die Erfindung betrifft einen polymerfolienbeschichteten Schaumstoff, ein Verfahren zu seiner Herstellung sowie seine Verwendung.

Polymerbeschichtete Schaumstoffe sind als verhautete Dämpfungs- und Isolationsschäume oder Akustikschäume oder auch als Klebebänder bekannt und werden bspw. dann eingesetzt, wenn der Schaumstoff stabilisiert werden soll oder gegenüber Feuchtigkeit, Lösemitteln, Weichmachern und anderen Lösemitteln undurchlässiger werden soll. Bei Akustikschäumen wird durch die zusätzliche Filmschicht eine bessere Geräuschdämpfung erzielt, als bei nichtbeschichteten Schäumen. Derartige Schaumstoffe finden auch Verwendung für Haftklebebänder.

Ferner ist es häufig erwünscht, eine hohe Schaumfestigkeit ohne Beeinträchtigung der Kompressibilität und Elastizität zu erhalten.

Dabei besteht ein besonderes Problem in der Verbindung von Schaumstoff und Trägerfolien. Es ist bekannt, mit Kleber beschichtete Kunststoffolie auf den Schaumstoff zu laminieren oder auch auf eine auf den Schaumstoff aufgebrachte Kleberschicht direkt die Trägerfolie zu bringen und festzukleben. Bei der Verwendung von Klebstoffen zur Erzielung einer Verbindung zwischen Verstärkungsfolie und Schaumstoff treten Kosten durch Vorsehen einer weiteren Komponente, nämlich des Haftklebers, als auch durch Vorsehen einer beschichteten Verstärkungsfolie auf.

Zur Vermeidung des Vorsehens eines zusätzlichen Klebstoffes zur Verbindung von Schaumstoff und Kunststoffolie wurde beispielsweise in der US-PS 4,574,697 vorgeschlagen, einen Polyurethanschaumstoff durch Aufschäumen auf die Verstärkungsfolie mit dieser zu verbinden. Hierbei ist das Aufschäumen schwierig zu kontollieren, es können keine fertigen Schaumprodukte eingesetzt werden und es wird eine relativ hohe Ausschußrate beobachtet.

In der EP-OS 86 304 705.6 wird ein Laminat aus Schaumstoff und Polyethylenfolie beschrieben, wobei die Polyethylenfolie unter Druck und Wärmeeinwirkung mit dem Schaumstoff aufkaschiert wird. Bei der Aufkaschierung der Folien unter Druck und Wärme sind aufwendige Steuerungen zur Aufrechterhaltung gleichmäßiger Bedingungen notwendig.

Bei allen vorstehend beschriebenen folienbeschichteten Schaumstoffen, insbesondere solchen, die für Haftklebebänder eingesetzt werden, ist ein hoher Fertigungsaufwand notwendig.

Die zur Verstärkung allgemein herangezogenen Folien können aus Handhabungsgründen eine bestimmte Dicke nicht unterschreiten, wobei dieses mehr oder weniger stark die für die Endanwender benötigte Kompressibilität des Schaumstoffes, bspw. bei Klebeband, beeinträchtigt.

Der Erfindung liegt dahingegen die Aufgabe zugrunde, einen preiswert herstellzustellenden und einfach aufgebauten gattungsgemäßen polymerbeschichteten Schaumstoff herzustellen.

Die Aufgabe wird erfindungsgemäß dadurch gelöst, daß die Folienbeschichtung durch Auftragen des Folienmaterials aus der Schmelze auf die Schaumstoffschicht aufgebracht ist.

Dabei kann es besonders vorteilhaft sein, daß die Schaumstoffschicht ein- oder beidseitig mit Verstärkungsfolie befilmt ist.

Bei einer besonders bevorzugten Ausführungsform eines erfindungsgemäßen polymerbeschichteten gattungsgemäßen Schaumstoffes ist eine Haftkleberschicht auf der oder den Folie (n) auf der der Schaumstoffschicht gegenüberliegenden Fläche aufgebracht. Diese Ausführungsform eignet sich insbesondere für die Herstellung von vibrationsdämpfenden oder Untergrundunebenheiten ausgleichenden Haftklebebändern und -folien. Es kann auch sinnvoll sein, wenn eine Haftkleberschicht direkt auf dem Schaumstoff aufgebracht ist.

Als Folienmaterial eignen sich insbesondere Polyalkylene, wie bspw. Polyethylen (LDPE, HDPE oder LLDPE), Propylen oder Kombinationen derselben. Es kann bspw. ein Auftragsgewicht zwischen 2 und 100 g/qm, bevorzugt 5 bis 50 g/qm und ganz bevorzugt zwischen 15 und 30 g/qm haben.

Der Schaumstoff kann offen- oder geschlossenzelligen Schaumstoff aufweisen. Bevorzugt handelt es sich dabei um Schaumstoffe, die im wesentlichen ein Polyolefin, wie Polyethylen, Polypropylen; ein Polyethylenvinylacetatcopolymeres, Polyurethan, Neopren, Silicon, Polyvinylchlorid oder Kombinationen derselben aufweisen.

Als Haftklebeschicht(en) können Haftkleber auf Naturkautschuk-, Synthesekautschuk-, Polysiloxan- oder Polyacrylat basis eingesetzt werden. Bei einer bevorzugten Ausführungsform für Haftklebebänder lassen sich bspw. Auftragsgewichte des Haftklebers zwischen 2 und 250 g/qm, bevorzugt zwischen 5 und 150 g/qm und ganz bevorzugt zwischen 20 und 80 g/qm realisieren.

Das erfindungsgemäße Verfahren weist die Schritte auf, daß eine Schaumstoffschicht vorgelegt wird und mit einem Polyalkylenmaterial aus der Schmelze ein- oder beidseitig beschichtet wird, und daß ggf. anschließend ein oder mehrere Haftkleberschichten in an sich bekannter Weise aufgebracht werden.

Gemäß einer Fortbildung dieses Verfahrens

mm) werden doppelseitig mittels eines Extruders Schichten von jeweils 10 g/qm Polyethylen aufgebracht. Anschließend werden beide Seiten mit der gleichen Acrylathaftkleberlösung, wie in Beispiel 1, beschichtet und anschließend das Lösemittel (Benzin 60/95)abgedampft, so daß 65 g/qm Acrylathaftkleber als Klebemittelschicht verbleiben. Als Dehäsivliner wird Polyethylenfolie zukaschiert.

Das fertige Montageklebeband eignet sich zur dauerhaften Befestigung von Zier- und Funktionsleisten, Schriftzügen, Emblemen, Blenden, Haltern und extrudierten Gummiprofilen in der Automobil-Industrie. Aus der Kombination zwischen Acrylathaftkleber und befilmtem, kompressiblem und dauerelastischem Trägerschaum resultiert eine hohe wirksame Klebefläche unmittelbar auch nach Montage auf rauhen und leicht unebenen Substraten. Die Lösemittel- und Weichmacherbeständigkeit dieses Schaumstoffklebebandes ist höher als vergleichsweise für Klebebänder mit unbefilmtem Schaumstoffträger. Im Reparaturfall kann der Fügeverbund getrennt werden, ohne daß der Schaumstoff zerstört wird, da sich Polyethylenbeschichtungsfolie und Polyurethanschaumstoff nicht voneinander trennen lassen.

## Ausführungsbeispiel 3

Einseitig wärmeaktivierbares Haftklebeband mit Schaumstoffträger zur Befestigung von Profilen aus Terpolymeren aus Ethylen, Propylen und Dienen (EPDM)

Ein 1 mm dicker Polyvinylchlorid-Schaumstoff wird einseitig mittels eines Extruders mit 20 g/qm Polyethylen befilmt. Die polyethylenfreie Schaumstoffseite wird im Transferverfahren mit einem Polyacrylathaftkleber (SECRYL 65 der Fa. LOHMANN GmbH & Co.KG, Neuwied) beschichtet und mit einem einseitig siliconisierten Schutzpapier (95 g/qm) abgedeckt.

Das so hergestellte Montageklebeband eignet sich zur dauerhaften Befestigung insbesondere von EPDM-Profilen auf die es unter Druck und Wärme - mit der Polyethylenseite zur EPDM-Oberfläche - laminiert wird.

Nach Abziehen des Schutzpapiers kann das auf diese Weise selbstklebend ausgerüstete Grumiprofil problemlos weiterverarbeitet werden, z. B. durch einfaches Aufkleben auf lackierte Kraftfahrzeugtürrahmen.

## Bezugszeichenliste

10: doppelseitiges Klebeband

12: Schaumstoff
14: Trägerfolie
16: Haftkleberbeschichtung
18: abhäsive Abdeckung

## Ansprüche

1. Polymerfolienbeschichteter Schaumstoff, dadurch gekennzeichnet, daß die Folienbeschichtung (14) durch Auftragen des Folienmaterials aus der Schmelze auf die Schaumstoffschicht (12) aufgebracht ist.

2. Polymerfolienbeschichteter Schaumstoff nach Anspruch 1, dadurch gekennzeichnet, daß die Schaumstoffschicht (12) ein- oder beidseitig mit Verstärkungsfolie (14) befilmt ist.

3. Polymerfolienbeschichteter Schaumstoff nach einem der vorangehenden Ansprüche, dadurch gekennzeichnet, daß eine Haftkleberschicht (16) auf der oder den Folie (n) (14) auf der der Schaumstoffschicht gegenüberliegenden Fläche aufgebracht ist.

4. Polymerfolienbeschichteter Schaumstoff nach einem der vorangehenden Ansprüche, dadurch gekennzeichnet, daß eine Haftkleberschicht (16) auf dem Schaumstoff (12) aufgebracht ist.

5. Polymerfolienbeschichteter Schaumstoff nach einem der vorangehenden Ansprüche, dadurch gekennzeichnet, daß das Folienmaterial ein Polyalkylen ist.

6. Polymerfolienbeschichteter Schaumstoff nach einem der vorangehenden Ansprüche, dadurch gekennzeichnet, daß die Schaumstoffschicht (12) einen offen- oder geschlossenzelligen Schaumstoff aufweist.

7. Polymerfolienbeschichteter Schaumstoff nach Anspruch 6, dadurch gekennzeichnet, daß der Schaumstoff (12) ein Polyolefin, wie Polyethylen, Polypropylen; ein Polyethylenvinylacetatcopolymeres, Polyurethan, Neopren, Silicon, Polyvinylchlorid oder Kombinationen derselben aufweist.

8. Polymerfolienbeschichteter Schaumstoff gemäß einem der vorangehenden Ansprüche, dadurch gekennzeichnet, daß das Folienmaterial (14) Polyethylen (LDPE, HDPE oder LLDPE), Polypropylen oder Kombinationen derselben aufweist.

9. Polymerfolienbeschichteter Schaumstoff nach einem der vorangehenden Ansprüche, dadurch gekennzeichnet, daß das Auftragsgewicht der aufgefilmten Polymerfolie (14) zwischen 2 und 100 g/qm, bevorzugt 5 bis 50 g/qm und ganz bevorzugt zwischen 15 und 30 g/qm liegt.

10. Polymerfolienbeschichteter Schaumstoff nach einem der vorangehenden Ansprüche, dadurch gekennzeichnet, daß die Haftklebeschicht(en)

wird das Polyalkylen aus einem Extruder auf die Schaumstoffschicht aufgebracht.

Dadurch, daß in Frage kommende Schaumstoffträger ein- oder doppelseitig auch mit einer dünnen Polyalkylenschicht befilmt werden, können flexible, kompressible folienbeschichtete Schaumstoffe, insbesondere für Haftklebebänder hergestellt werden, deren Eigenschaften im wesentlichen durch den Schaumstoff bestimmt werden.

Es ist bevorzugt, Polyethylen oder auch Polypropylen für diese Zwecke einzusetzen, die sich mittels eines Extruders aus der Schmelze mit einer Schichtstärke von 10 g/qm und mehr auf die Schaumstoffoberfläche auftragen lassen.

Die Vorteile des erfindungsgemäßen Verfahrens liegen insbesondere darin, daß beliebige Schaumstoffe ein- oder doppelseitig mittels eines einfachen und kostengünstigen Verfahrensschrittes mechanisch und auch chemisch stabilisiert werden können. Die Verbindung zwischen der aufge filmten Polymerschicht und dem Schaumstoff ist zwangsläufig gut, da durch das Eindringen des Polymeren auch in feine Schaumporen und Oberflächenunebenheiten eine große Kontaktfläche vorhanden ist und demzufolge eine quasi-formschlüssiger Verbindung erzielt wird. Die derart auf den Schaumstoff aufgebrachte Polyalkylenschicht beläßt dem Schaumstoff weitestgehend seine ursprünglichen Eigenschaften, wie Kompressibilität und Dehnungsverhalten.

Abgesehen von einer erwünschten Verstärkung des Schaumes kann durch eine derartige Befilmung, die bei dünnem Schichtauftrag die Schaumstoffqualität kaum beeinflußt, ein Schaumstoffträger gegenüber Feuchtigkeit, Lösemitteln, Weichmachern und anderen Chemikalien versiegelt werden.

Bleibt die Polyalkylenschicht haftkleberfrei, so kann sie durch Wärmeeinwirkung derartig aktiviert werden, daß sie als Kleber fungiert. Vorzugsweise auf niederenergetischen Substraten wie z. B. Gummimaterialien werden auf diese Weise ausgezeichnete Verbundhaftungen erzielt.

Nachfolgend wird die Erfindung anhand von Ausführungsbeispielen und anhand der begleitenden Zeichnungen näher beschrieben, in der zeigt:

Fig.1 einen erfindungsgemäßen Schaumstoff im Querschnitt, und

Fig.2 ein erfindungsgemäßes Haftklebeband im Schnitt.

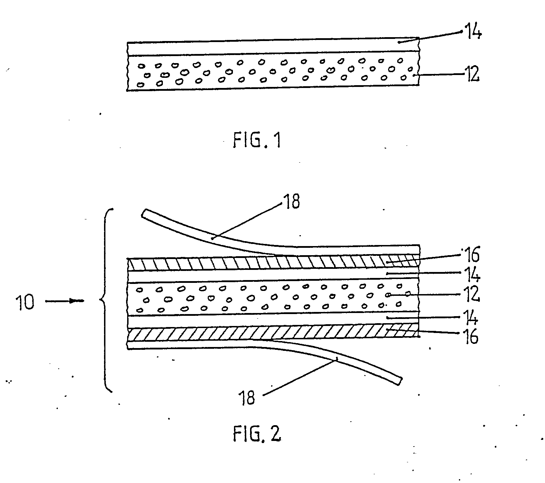

In Figur 1 ist ein erfindungsgemäß mit einer aufgefilmten Polyethylenschicht (14) stabilisierter Polyurethanschaumstoff (12) dargestellt. Es ist ersichtlich, das sich die aufgefilmte Polyethylenschicht (14) vollständig der Ober flächenstruktur des Schaumstoffes (12) anpaßt, so daß eine quasiformschlüssige Verbindung erreicht wird.

In Figur 2 ist ein erfindungsgemäßes doppelseitiges Haftklebeband dargestellt, bei dem eine zentrale Schaumstoffschicht (12) von zwei aufgefilmten Verstärkungspolyalkylenschichten (14) umschlossen wird. Auf den Polyalkylenschichten (14) befinden sich zwei Haftkleberschichten (16), die hier durch Abdeckfolien (18), die abhäsiv ausgerüstet sind, wie silikonisiertes Papier oder dergleichen, vor Gebrauch abgedeckt sind.

Nachfolgend soll die Erfindung nun anhand von Ausführungsbeispielen näher erläutert werden.

Beispiel 1

Kompressibles doppelseitig klebendes Schaumstoffklebeband zur Befestigung polymerer Druckklischees

Eine 0,5 mm dicke Polyethylenschaumfolie wird mittels eines Extruders beidseitig mit je 30 g/qm Polyethylen aus der Schmelze beschichtet.

Der beidseitig polyethylenbeschichtete Polyethylenschaum wird sodann auf einer Seite mit einer Haftkleberlösung auf Synthesekautschukbasis (im Handel erhältlich von der Fa.National Starch unter der Bezeichnung DUROTAK 280-8580) beschichtet und auf der anderen Seite mit einer Acrylatlösung (ACRONAL 102 L der Fa BASF AG, Ludwigshafen) beschichtet, wobei nach Auftrag der Acrylatlösung und Verdampfen des Lösemittels (Benzin 60/95) auf beiden Seiten jeweils eine Schicht von 40 g/qm verbleibt.

Die beiden Haftkleberschichten werden mit einer abhäsiv ausgerüsteten Polyethylenfolie abgedeckt und in klebebandbreite Streifen (420 mm) und 0.50 mm Höhe zerschnitten. Je nach nationalen Anforderungen kann das Schaumstoffklebeband aber auch bspw. in Dicken von 0.5 mm, 0.38 mm oder auch 1,6 mm durch Einsatz eines entsprechenden Schaumstoffes hergestellt werden.

Das Klebeband eignet sich hervorragend für die Befestigung polymerer Druckklischees, wobei klischeeseitig der Haftkleber auf Acrylatbasis angeordnet wird und zylinderseitig ein Kleber auf Synthesekautschuk-Basis.

Dieser Klebverband liefert hervorragende Druckergebnisse, wobei sich die Klischees rückstandsfrei vom Zylinder ablösen lassen.

Ausführungsbeispiel 2

Doppelseitig klebendes Montageklebeband mit Schaumstoffträger

Auf eine Polyurethanschaumstoffolie(Dicke 0,8

(16) einen Haftkleber auf Naturkautschuk-, Synthesekautschuk-, Polysiloxan- oder Polyacrylatbasis aufweist(en).

11. Polymerfolienbeschichteter Schaumstoff nach einem der vorangehenden Ansprüche, dadurch gekennzeichnet, daß das Auftragsgewicht des Haftklebers zwischen 2 und 250 g/qm, bevorzugt zwischen 5 und 150 g/qm und ganz bevorzugt zwischen 20 und 80 g/qm liegt.

12. Verfahren zum Herstellen eines Haftklebebandes nach einem der vorangehenden Ansprüche, dadurch gekennzeichnet, daß die Schaumstoffschicht vorgelegt wird und mit einem Polyalkylenmaterial aus der Schmelze ein- oder beidseitig beschichtet wird, und daß ggf. anschließend ein oder mehrere Haftkleberschichten in an sich bekannter Weise aus der Lösung oder aus der Schmelze (Haftschmelzkleber) aufgebracht werden.

13. Verfahren nach Anspruch 12, dadurch gekennzeichnet, daß das Polyalkylen aus einem Extruder auf die Schaumstoffschicht aufgebracht wird.

14. Verwendung des polymerfolienbeschichteten Schaumstoffs nach einem der vorangehenden Ansprüche zur Herstellung von verhauteten Dämpfungs- und Isolationsschäumen oder Akustikschäumen oder als Montageklebebänder.

FIG. 1

FIG. 2